# EUROPEAN PATENT APPLICATION

(11) **EP 4 284 066 A1**
(43) Date of publication of application: **29.11.2023**
(21) Application number: 21928408.0
(22) Date of filing: 01.03.2021
(51) Int. Cl.: H04W 36/34, H04W 76/00

(54) **METHOD FOR OBTAINING SLICE INFORMATION AND TERMINAL DEVICE**

(71) Applicant: GUANGDONG OPPO MOBILE TELECOMMUNICATIONS CORP., LTD., Dongguan, Guangdong 523860 (CN)
(72) Inventor: LU, Fei, Dongguan, Guangdong 523860 (CN); FU, Zhe, Dongguan, Guangdong 523860 (CN)
(74) Representative: Novagraaf Technologies
(86) International application number: PCT/CN2021/078468
(87) International publication number: WO 2022/183317

(57) **Abstract**

Embodiments of the present application relate to a method for obtaining slice information and a terminal device. The method comprises: in response to a Non-Access Stratum (NAS) of a terminal device receiving allowed Network Slice Selection Assistance Information (NSSAI) or updating the allowed NSSAI, the NAS of the terminal device sends slice information expected to be used to an Access Stratum (AS) of the terminal device; and the AS of the terminal device receives and stores the slice information expected to be used so as to use the slice information expected to be used during cell selection or cell reselection, wherein the slice information expected to be used is the allowed NSSAI or a subset of the allowed NSSAI. The embodiments of the present disclosure can enable the AS of the terminal device to always store the slice information expected to be used, such that cell selection or cell reselection can be performed according to the slice information expected to be used.

## Description

### TECHNICAL FIELD

The present disclosure relates to the communication field, and more specifically, to a method for obtaining slice information and a terminal device.

### BACKGROUND

In R15/R16 standard of 5G technology, when User Equipment (UE) selects a cell for access, it does not sense which pieces of Single-Network Slice Selection Assistance Information (S-NSSAI) the cell supports. The UE requests the required S-NSSAI by carrying the requested NSSAI (which may include multiple S-NSSAIs) in a registration request message. If the cell supports access of the S-NSSAI, an Access and Mobility Management Function (AMF) carries the S-NSSAI in allowed NSSAI carried in a registration accept message to indicate that the LTE is allowed to use the service of the slice; and if the cell or a Radio Access Network (RAN) node where the UE is located does not support the access of the S-NSSAI, the AMF carries rejected S-NSSAI in rejected NSSAI carried in a registration reject message to indicate that the UE cannot use the service of this slice.

In the related art, a Non-Access Stratum (NAS) of the UE provides slice information to an Access Stratum (AS) layer only when requesting to setup a Radio Resource Control (RRC) connection, and then the AS uses the slice information for cell selection. However, in some scenarios, for example, when the UE undergoes cell reselection or cell selection, the NAS layer of the UE may not trigger the setup of the RRC connection request, and thus the AS layer cannot know the UE's intended slice information, resulting in the AS layer being unable to perform cell selection based on the intended slice information.

### SUMMARY

Embodiments of the present disclosure provide a method for obtaining slice information and a terminal device, which can realize that the AS layer of the UE always stores the intended slice information, so that cell selection or cell reselection can be performed according to the intended slice information.

An embodiment of the present disclosure provides a method for obtaining slice information, which is applied to a terminal device, and the method includes:
in response to a Non-Access Stratum of a terminal device receiving allowed network slice selection assistance information (NSSAI) or updating the allowed NSSAI, sending, by the Non-Access Stratum of the terminal device, intended slice information to an Access Stratum of the terminal device; and
receiving and storing, by the Access Stratum of the terminal device, the intended slice information, so as to use the intended slice information in cell selection or cell reselection; wherein the intended slice information is the allowed NSSAI or a subset of the allowed NSSAI.

An embodiment of the present disclosure also provides a terminal device, including: a sending module in a Non-Access Stratum and a receiving and storing module in an Access Stratum, wherein,
the sending module is configured to send intended slice information to the receiving and storing module in response to the Non-Access Stratum of the terminal device receiving allowed NSSAI or updating the allowed NSSAI; and
the receiving and storing module is configured to receive and store the intended slice information, so as to use the intended slice information in cell selection or cell reselection; wherein the intended slice information is the allowed NSSAI or a subset of the allowed NSSAI.

An embodiment of the present disclosure also provides a terminal device including a processor and a memory, the memory is configured to store a computer program, and the processor is configured to call and run the computer program stored in the memory to perform any of the above methods.

An embodiment of the present disclosure also provides a chip, including: a processor, configured to call and run a computer program from a memory, to cause a device installed with the chip to perform any of the above methods.

An embodiment of the present disclosure also provides a computer-readable storage medium for storing a computer program that causes a computer to perform any of the above methods.

An embodiment of the present disclosure also provides a computer program product, including computer program instructions that cause a computer to perform any of the above methods.

An embodiment of the present disclosure also provides a computer program, which causes a computer to perform any of the above methods.

In the embodiments of the present disclosure, after receiving new allowed NSSAI or updating the allowed NSSAI, the NAS layer sends the intended slice information to the AS layer; and the AS layer stores the intended slice information for use in subsequent cell selection or cell reselection. Therefore, the AS layer always stores the required intended slice information, and thus the AS layer can always perform the cell selection or cell reselection according to the slice information.

### BRIEF DESCRIPTION OF THE DRAWINGS

FIG. 1 is a schematic diagram of an application scenario of an embodiment of the present disclosure.
FIG. 2 is a flow chart of implementation of cell selection by UE according to intended slice information in the related art.
FIG. 3 is a schematic flowchart of a method 300 for obtaining slice information according to an embodiment of the present disclosure.
FIG. 4 is a flowchart of an implementation according to Embodiment 1 of the present disclosure.
FIG. 5 is a flowchart of an implementation according to Embodiment 2 of the present disclosure.
FIG. 6 is a flowchart of an implementation according to Embodiment 3 of the present disclosure.
FIG. 7 is a schematic structural diagram of a terminal device 700 according to an embodiment of the present disclosure.
FIG. 8 is a schematic structural diagram of a terminal device 800 according to an embodiment of the present disclosure.
FIG. 9 is a schematic structural diagram of a communication device 900 according to an embodiment of the present disclosure.
FIG. 10 is a schematic structural diagram of a chip 1000 according to an embodiment of the present disclosure.

### DETAILED DESCRIPTION

The technical solutions in the embodiments of the present disclosure will be described below in conjunction with the drawings in the embodiments of the present disclosure.

It should be noted that the terms "first" and "second" in the description and claims of the embodiments of the present disclosure and the above drawings are used to distinguish similar objects, but not necessarily used to describe a specific order or sequence. The objects described by "first" and "second" described at the same time may be the same or different.

The technical solutions in the embodiments of the present disclosure can be applied to various communication systems such as a Global System of Mobile communication (GSM) system, a Code Division Multiple Access (CDMA) system, a Wideband Code Division Multiple Access (WCDMA) system, a General Packet Radio Service (GPRS), a Long Term Evolution (LTE) system, an Advanced long term evolution (LTE-A) system, a New Radio (NR) system, an evolution system of a NR system, a LTE-based access to unlicensed spectrum (LTE-U) system, a NR-based access to unlicensed spectrum (NR-U) system, a Universal Mobile Telecommunication System (UMTS), a Wireless Local Area Network (WLAN), a Wireless Fidelity (Wi-Fi), a next-generation communication (5th-generation, 5g) system or other communication systems.

Generally speaking, traditional communication systems support a limited number of connections and are easy to implement. However, with the development of communication technologies, mobile communication systems will not only support traditional communications, but will also support, for example, Device to Device (D2D) communication, machine to machine (M2M) communication, machine type communication (MTC), vehicle to vehicle (V2V) communication, etc. The embodiments of the present disclosure can also be applied to these communication systems.

Optionally, the communication system in the embodiments of the present disclosure can be applied to a Carrier Aggregation (CA) scenario, a Dual Connectivity (DC) scenario, or a standalone (SA) deployment scenario.

The frequency spectrum applied in the embodiments of the present disclosure is not limited. For example, the embodiments of the present disclosure can be applied to licensed spectrum, and can also be applied to unlicensed spectrum.

Various embodiments are described in combination with the network device and the terminal device in the embodiments of the present disclosure where the terminal device may also be referred to as user equipment (UE), an access terminal, a user unit, a user station, a mobile station, a mobile site, a remote station, a remote terminal, a mobile device, a user terminal, a terminal, a wireless communication device, a user agent or a user device. The terminal device can be a station (ST) in a WLAN, which may be a cellular phone, a cordless phone, a Session Initiation Protocol (SIP) phone, a Wireless Local Loop (WLL) station, and a Personal Digital Assistant (PDA) device, a handheld device with a wireless communication function, a computing device or other processing devices connected to wireless modems, vehicle-mounted devices, wearable devices, and terminal devices in next-generation communication systems, such as a terminal devices in the NR network or a terminal device in the future evolution of the Public Land Mobile Network (PLMN) network.

As an example instead of a limitation, in the embodiments of the present disclosure, the terminal device may also be a wearable device. The wearable device can also be referred to as a wearable smart device, which is a general term for wearable devices which are designed and developed by using wearable technology to intelligently design and develop everyday wear, such as glasses, gloves, watches, clothing and shoes. The wearable device is a portable device that is directly worn on the body or integrated into user's clothes or accessories. The wearable device is not only a hardware device, but also realizes powerful functions through software support, data interaction, and cloud interaction. In a broad sense, the wearable smart device includes full-featured and large-sized devices of which complete or partial functions can be achieved without relying on smart phones, such as smart watches or smart glasses, and devices which focus on only a certain type of application function and need to cooperate with other devices such as smart phones, such as various smart bracelets and smart jewelry for physical sign monitoring.

The network device can be a device used to communicate with a mobile device. The network device can be an Access Point (AP) in WLAN, a Base Transceiver Station (BTS) in GSM or CDMA, or a NodeB (NB) in WCDMA, and can also be an Evolutional Node B (eNB or eNodeB) in LTE, a relay station, an access point, a vehicle-mounted device, a wearable device, a network device (gNB) in a NR network, a network device in future evolutional PLMN network, or the like.

In the embodiments of the present disclosure, the network device provides services for a cell, and the terminal device communicates with the network device through transmission resources (for example, frequency domain resources, or spectrum resources) used by the cell. The cell may be a cell corresponding to the network device (e.g., a cell corresponding to the base station), or belong to a macro base station or a base station corresponding to a small cell. The small cell herein can include a Metro cell, a Micro cell, a Pico cell, a Femto cell, etc., which are characterized in small coverage and low transmission power, and are suitable for providing high-rate data transmission services.

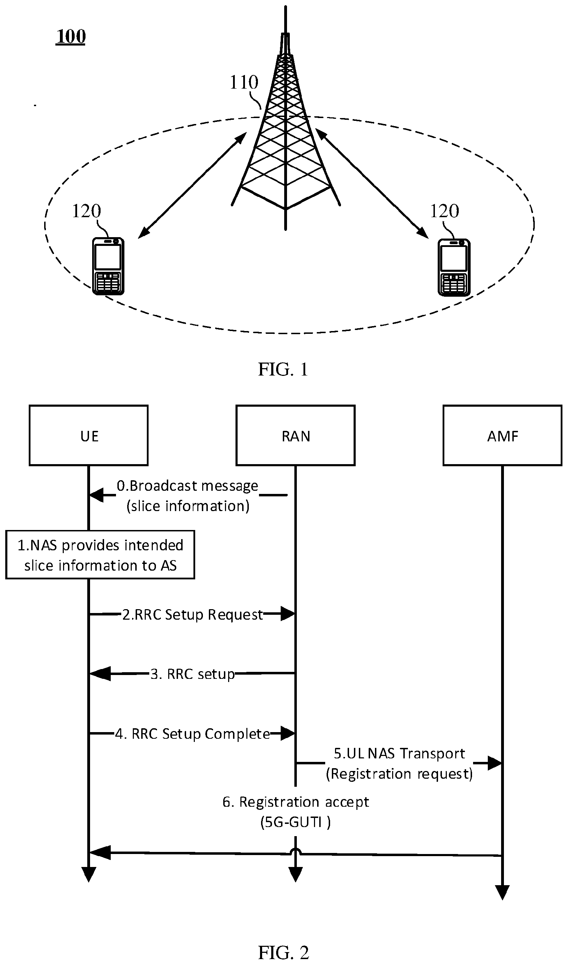

FIG. 1 exemplarily shows one network device 110 and two terminal devices 120. Optionally, the wireless communication system 100 may include multiple network devices 110, and there may be other numbers of terminal devices 120 included within the coverage area of each network device 110, which is not limited in the embodiments of the present disclosure. The embodiments of the present disclosure may be applied to one terminal device 120 and one network device 110, and may also be applied to one terminal device 120 and another terminal device 120.

Optionally, the wireless communication system 100 may further include other network entities such as a Mobility Management Entity (MME), and an Access and Mobility Management Function (AMF), which is not limited in the embodiments of the present disclosure.

It should be understood that the terms "system" and "network" are often used interchangeably herein. The term "and/or" used herein is merely to describe relative relationships of relative objects, indicating that there can be three kinds of relationships. For example, A and/or B can indicate three cases where A exists alone, A and B exist simultaneously, or B exists alone. In addition, the character "/" used herein generally indicates that the related objects before and after this character are in an "or" relationship.

It should be understood that "indicate" mentioned in the embodiments of the present disclosure may be a direct indication or an indirect indication, or may represent an associated relationship. For example, if A indicates B, it may represent that A directly indicates B, for example, B can be obtained from A; or it may represent that A indicates B indirectly, for example, A indicates C, and B can be obtained from C; or it may represent that there is an associated relationship between A and B.

In the description of the embodiments of the present disclosure, the term "corresponding" may indicate that there is a direct or indirect corresponding relationship between two objects, or may indicate that there is an associated relationship, a relationship of indicating and being indicated, or a relationship of configuring and being configured between the two objects, and so on.

In order to facilitate understanding of the technical solutions of the embodiments of the present disclosure, relevant technologies of the embodiments of the present disclosure are described below. The following relevant technologies can be arbitrarily combined with the technical solutions of the embodiments of the present disclosure as optional solutions, which all fall within the protection scope of the embodiments of the present disclosure.

In the R15/R16 standard of 5G technology, when the UE selects a cell to access, it does not sense which S-NSSAIs the cell supports. The UE requests the required S-NSSAI by carrying the requested NSSAI (which may include multiple S-NSSAIs) in a registration request message. If the cell supports the access of the S-NSSAI, the AMF carries the S-NSSAI in the allowed NSSAI carried in a registration accept message to indicate that the UE is allowed to use the service of the slice; and if the cell or RAN node where the LTE is located does not support the access of the S-NSSAI, the AMF carries the rejected S-NSSAI in the rejected NSSAI carried in the registration accept message to indicate that the UE cannot use the service of the slice.

In addition, in the R17 standard, the 3rd Generation Partnership Project (3GPP) began to consider that cells in different frequency bands support different S-NSSAIs, different slice services are supported in different cells, and the supported slice information is broadcast in a broadcast message. When the NAS layer in the UE requests the AS layer to setup an RRC connection, it will notify the AS layer of information of the intended slice information, so that the AS layer can perform cell selection according to the intended slice information. FIG. 2 is a flow chart of performing cell selection by the UE according to the intended slice information in the related art, which includes the following steps.

In step 0, the RAN broadcasts the supported slice information in a broadcast message.

In step 1, the NAS layer in the UE requests the AS layer to setup an RRC connection, and provides the intended slice information , a RRC connection setup cause value, a NAS-Protocol Data Unit (PDU), etc. The NAS-PDU refers to a registration request message, and the registration request message carries parameters such as a 5G Globally Unique Temporary UE Identity (5G-GUTI), a registration type, etc.

The AS layer selects a suitable cell for access according to the intended slice information provided by the NAS layer and the supported slice information in the broadcast message.

In step 2, the UE sends an RRC setup request message to the RAN, where the message carries S-TMSI and the RRC setup cause value.

In step 3, the RAN accepts the RRC setup request and sends an RRC setup message to the UE.

In step 4, the UE sends an RRC setup complete message to the RAN, where the message carries the NAS-PDU and the intended slice information in step 1.

In step 5, the RAN selects an AMF, and sends a N2 message-UL NAS TRANSPORT message to the AMF, the message carrying the above NAS-PDU.

In step 6, the AMF accepts the registration, and returns a registration accept message to the UE, the message carrying a new 5G-GUTI.

In the related art, the NAS layer of the UE provides the intended slice information to the AS layer only when requesting to set up an RRC connection, and then the AS uses the slice information to perform the cell selection. However, in some scenarios, for example, when the UE undergoes cell reselection or cell selection, the NAS layer of the UE may not trigger the setup of the RRC connection request, and thus the AS layer cannot know the information of the UE's intended slice, resulting in the AS layer being unable to perform the cell selection based on the intended slice, which in turn results in the UE failing to camp on the optimal cell.

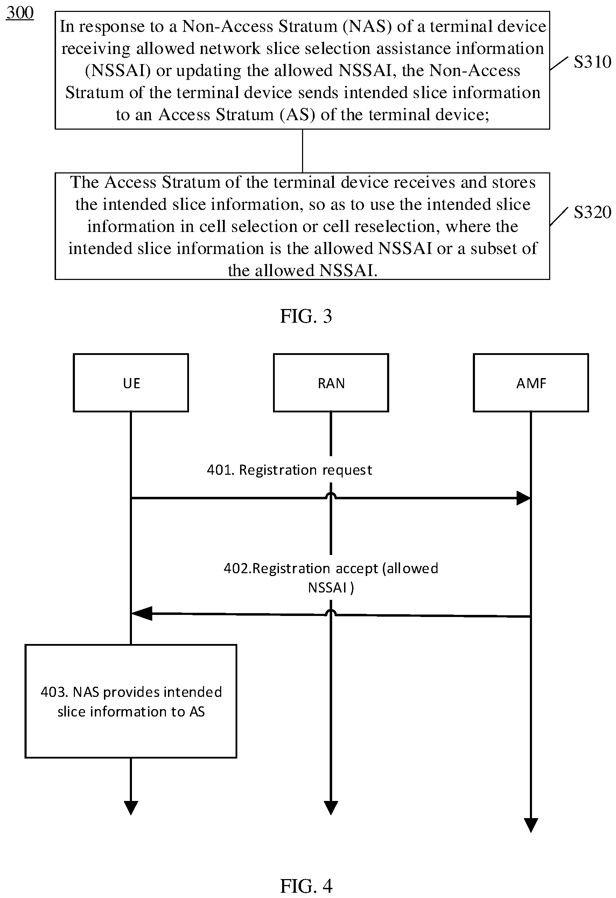

In an embodiment of the present disclosure, there is proposed a method for obtaining slice information, which can be applied to a terminal device. FIG. 3 is a schematic flowchart of a method 300 for obtaining slice information according to an embodiment of the present disclosure. The method may optionally be applied to the system shown in FIG. 1, but is not limited thereto. The method includes at least some of the following.

In S310, in response to a Non-Access Stratum (NAS) of a terminal device receiving allowed network slice selection assistance information (NSSAI) or updating the allowed NSSAI, the Non-Access Stratum of the terminal device sends intended slice information to an Access Stratum (AS) of the terminal device.

In S320, the Access Stratum of the terminal device receives and stores the intended slice information, so as to use the intended slice information in cell selection or cell reselection, where the intended slice information is the allowed NSSAI or a subset of the allowed NSSAI.

Subsequently, the Access Stratum of the terminal device can select a suitable cell for access according to the intended slice information and the supported slice information in a broadcast message.

In the above process, after receiving the allowed NSSAI or updating the allowed NSSAI, the NAS layer sends the intended slice information to the AS layer; and the AS layer stores the intended slice information for use in the subsequent cell selection or cell reselection. Through the above process, the AS layer always stores the intended slice information, so that the AS layer can always perform the cell selection or cell reselection based on the intended slice information, thereby ensuring that the UE can camp on the optimal cell.

Optionally, in the above process, the intended slice information sent by the NAS layer to the AS may be: the allowed NSSAI received by the terminal device, or a subset of the allowed NSSAI received by the terminal device.

Alternatively, the intended slice information sent by the NAS layer to the AS may be: the allowed NSSAI updated by the terminal device or a subset of the allowed NSSAI updated by the terminal device.

In some implementations, receiving the allowed NSSAI by the NAS layer of the terminal device includes: receiving a registration accept message by the NAS layer of the terminal device, where the registration accept message carries the allowed NSSAI.

### Embodiment 1

FIG. 4 is a flowchart of an implementation according to Embodiment 1 of the present disclosure. In Embodiment 1, a terminal device receives a registration accept message sent by a network device, and the registration accept message carries allowed NSSAI. In the example shown in FIG. 4, the introduction is provided by taking an AMP as an example of the network device. As shown in FIG. 4, it includes the following steps.

In step 401, the UE sends a registration request message to the AMF, the registration request message carrying requested NSSAI, and the requested NSSAI carrying information of S-NSSAI that the UE intends to access.

In step 402, the AMF returns a registration accept message to the UE, the registration acceptance message carrying the allowed NSSAI and the rejected NSSAI. The allowed NSSAI is used to indicate the NSSAI that is allowed to be used, and the rejected NSSAI carries the S-NSSAI that is rejected and carries a reject cause value.

In step 403, the NAS layer of the UE provides the intended slice information to the AS layer, where the intended slice information may be the allowed NSSAI or a subset of the allowed NSSAI. The AS layer of the UE stores the intended slice information, and uses it when it needs to perform the cell selection or cell reselection subsequently.

When the cell selection or cell reselection is performed subsequently, the AS layer of the UE can select a suitable cell for access according to the intended slice information and the supported slice information in the received broadcast message; reference can be made to the accessing step in step 1 and the subsequent steps in FIG. 2 for details.

In this embodiment, the NAS layer of the UE can determine the intended slice information after initiating the registration, and provide the intended slice information to the AS layer for use by the AS layer when it needs to perform the cell selection or cell reselection later, so that the AS layer always stores the intended slice information, ensuring that the AS can always select a suitable cell according to the intended slice information.

In some implementations, receiving the allowed NSSAI by the NAS layer of the terminal device includes: receiving a configuration update command message by the NAS layer of the terminal device, where the configuration update command message carries the allowed NSSAI.

### Embodiment 2

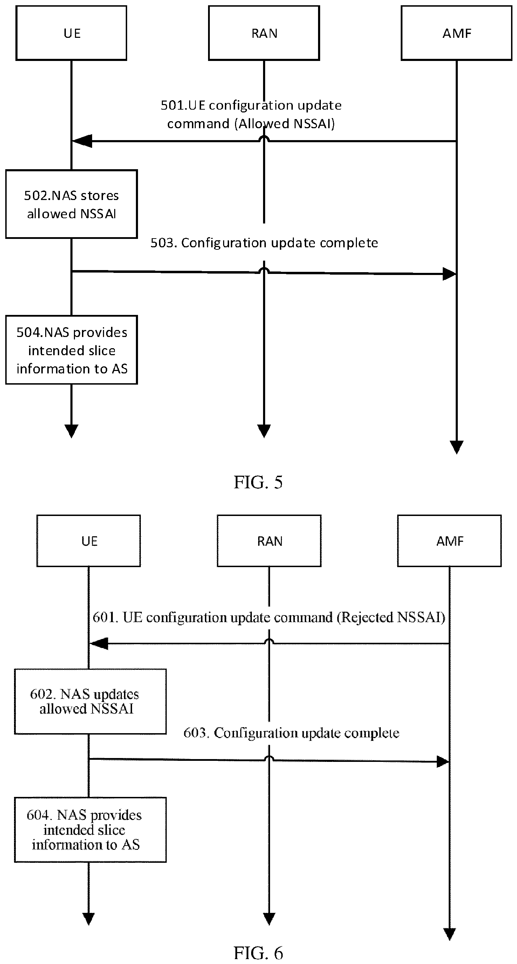

FIG. 5 is a flowchart of an implementation according to Embodiment 2 of the present disclosure. In Embodiment 2, the terminal device receives a configuration update command message sent by the network device, and the configuration update command message carries the allowed NSSAI. In the example shown in FIG. 5, the introduction is provided by taking the AMF as an example of the network device. As shown in FIG. 5, it includes the following steps.

In step 501, the UE has registered in the network, but when the UE's allowed NSSAI is changed, the AMF sends a UE configuration update command message to the UE, the configuration update command message carrying new allowed NSSAI.

In step 502, the NAS layer of the UE stores the new allowed NSSAI.

In step 503, the UE returns a UE configuration update complete message to the AMF.

In step 504, the NAS layer of the UE provides the intended slice information to the AS layer, where the intended slice information may be the allowed NSSAI or a subset of the allowed NSSAI. The AS layer of the UE stores the intended slice information, and uses it when it needs to perform the cell selection or cell reselection subsequently.

In the above process, there is no limitation on the order of step 503 and step 504, and any one of the two steps can be performed first, or they can be performed synchronously.

When the cell selection or cell reselection is performed subsequently, the AS layer of the UE can select a suitable cell for access according to the intended slice information and the supported slice information in the received broadcast message; reference can be made to the accessing step in step 1 and the subsequent steps in FIG. 2 for details.

In this embodiment, after registering in the network, the NAS layer of the UE can receive the latest allowed NSSAI in real time, generate the intended slice information using the allowed NSSAI, and provide the intended slice information to the AS layer for use by the AS layer when it needs to perform the cell selection or cell reselection subsequently; accordingly, the AS layer always stores the intended slice information, ensuring that the AS can always select a suitable cell according to the intended slice information.

In some implementations, updating the allowed NSSAI by the NAS layer of the terminal device includes: receiving a configuration update command message by the NAS layer of the terminal device, where the configuration update command message carries rejected NSSAI; and updating the allowed NSSAI by the NAS layer of the terminal device using the rejected NSSAI.

### Embodiment 3

FIG. 6 is a flowchart of an implementation according to Embodiment 3 of the present disclosure. In Embodiment 3, the terminal device receives a configuration update command message sent by the network device, the configuration update command message carrying the rejected NSSAI, and the terminal device updates the allowed NSSAI according to the rejected NSSAI. In the example shown in FIG. 6, the introduction is provided by taking the AMF as an example of the network device. As shown in FIG. 6, it includes the following steps.

In step 601, the UE has registered in the network, but when the rejected NSSAI corresponding to the UE is changed, the AMF sends to the UE a UE configuration update command message, and the message carries the updated rejected NSSAI.

In step 602, the NAS layer of the UE updates the allowed NSSAI according to the rejected NSSAI. For example, the previous allowed NSSAI includes slice 1 and slice 2. If the rejected NSSAI received includes slice 1, the allowed NSSAI is updated; slice 1 in the allowed NSSAI is deleted, and the updated allowed NSSAI includes only slice 2.

In step 603, the UE returns a UE configuration update complete message to the AMF.

In step 604, the NAS layer of the UE provides the intended slice information to the AS layer, where the intended slice information may be the updated allowed NSSAI or a subset of the updated allowed NSSAI. The AS layer of the UE stores the intended slice information, and uses it when it needs to perform the cell selection or cell reselection subsequently.

In the above process, there is no limitation on the order of step 603 and step 604, and either one of the two steps can be performed first, or they can be performed synchronously.

When the cell selection or cell reselection is performed subsequently, the AS layer of the UE can select a suitable cell for access according to the intended slice information and the supported slice information in the received broadcast message; reference can be made to the accessing step in step 1 and the subsequent steps in FIG. 2 for details.

In this embodiment, after registering in the network, the NAS layer of the UE can receive the latest rejected NSSAI in real time, update the allowed NSSAI according to the rejected NSSAI, generate the intended slice information using the updated allowed NSSAI, and provide the intended slice information to the AS layer for use by the AS layer when it needs to perform the cell selection or cell reselection subsequently; accordingly, the AS layer always stores the intended slice information, ensuring that the AS can always select a suitable cell according to the intended slice information.

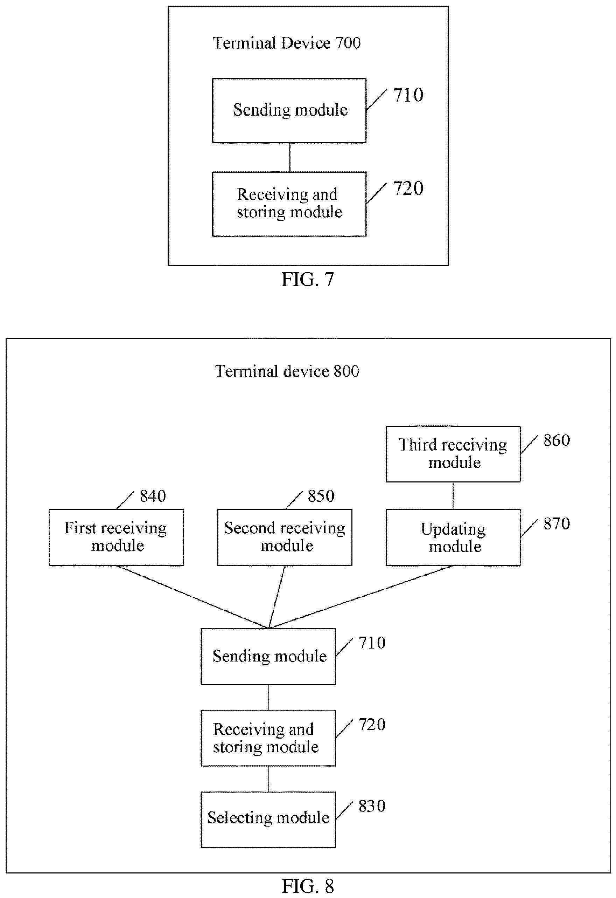

An embodiment of the present disclosure also proposes a terminal device. FIG. 7 is a schematic structural diagram of a terminal device 700 according to the embodiment of the present disclosure, including: a sending module 710 in a Non-Access Stratum and a receiving and storing module 720 in an Access Stratum; where,
the sending module 710 is configured to send intended slice information to the receiving and storing module in response to the Non-Access Stratum of the terminal device receiving allowed NSSAI or updating the allowed NSSAI; and
the receiving and storing module 720 is configured to receive and store the intended slice information, so as to use the intended slice information in cell selection or cell reselection; where the intended slice information is the allowed NSSAI or a subset of the allowed NSSAI.

FIG. 8 is a schematic structural diagram of a terminal device 800 according to an embodiment of the present disclosure. As shown in FIG. 8, optionally, the above terminal device further includes:
a selection module 830 in the Access Stratum, configured to select a suitable cell for access according to the intended slice information and supported slice information in a broadcast message.

Optionally, the above terminal device further includes:
a first receiving module 840 in the Non-Access Stratum, configured to receive a registration accept message, where the registration acceptance message carries the allowed NSSAI.

Optionally, the above terminal device further includes:
a second receiving module 850 in the Non-Access Stratum, configured to receive a configuration update command message, where the configuration update command message carries the allowed NSSAI.

Optionally, the above terminal device further includes: a third receiving module 860 and an updating module 870 in the Aon-Access Stratum; wherein,
the third receiving module 860 is configured to receive a configuration update command message, where the configuration update command message carries rejected NSSAI, and
the updating module 870 is configured to update the allowed NSSAI using the rejected NSSAI.

Optionally, the intended slice information above is the allowed NSSAI received by the terminal device or the allowed NSSAI updated by the terminal device.

It should be understood that the above and other operations and/or functions of the modules in the terminal device according to the embodiment of the present disclosure are to implement the corresponding process of the terminal device in the method 300 in FIG. 3, which will not be repeated here for the sake of brevity.

It should be noted that the functions described with respect to each module (sub-module, unit, component, or the like) in the terminal device 700 and terminal device 800 in the embodiments of the present disclosure may be realized by different modules (sub-modules, units, components, or the like) or by the same module (sub-module, unit, component, or the like). For example, the first receiving module and the second receiving module can be different modules, or can be the same module, both of which can realize the corresponding functions thereof in the embodiments of the present disclosure. In addition, the sending module and the receiving module in the embodiments of the present disclosure may be realized by a transceiver of the device, and part or all of the other modules may be realized by a processor of the device.

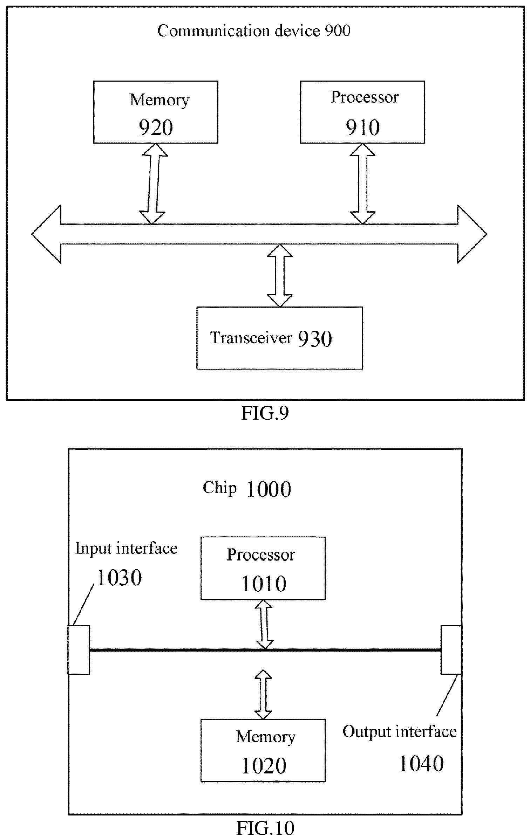

FIG. 9 is a schematic structural diagram of a communication device 900 according to an embodiment of the present disclosure. The communication device 900 shown in FIG. 9 includes a processor 910. The processor 910 can call and run a computer program from a memory to carry out the methods in the embodiments of the present disclosure.

Optionally, as shown in FIG. 9, the communication device 900 can further include a memory 920. The processor 910 can call and run the computer program from the memory 920 to implement the methods in the embodiments of the present disclosure.

The memory 920 can be a separate device independent of the processor 910, or can be integrated in the processor 910.

Optionally, as shown in FIG. 9, the communication device 900 can further include a transceiver 930, and the processor 910 can control the transceiver 930 to communicate with other devices, and specifically, to transmit information or data to other devices, or to receive information or data transmitted from other devices.

The transceiver 930 can include a transmitter and a receiver. The transceiver 930 can further include an antenna, and the number of the antennas can be one or more.

Optionally, the communication device 900 can be the terminal device in the embodiments of the present disclosure, and the communication device 900 can implement the corresponding processes which are implemented by the terminal device in the methods of the embodiments of the present disclosure, which will not be repeated here for the sake of brevity.

FIG. 10 is a schematic structural diagram of a chip 1000 according to an embodiment of the present disclosure. The chip 1000 shown in FIG. 10 includes a processor 1010 which can call and run a computer program from a memory to carry out the methods in the embodiments of the present disclosure.

Optionally, as shown in FIG. 10, the chip 1000 can further include a memory 1020. The processor 1010 can call and run the computer program from the memory 1020 to carry out the methods in the embodiments of the present disclosure.

The memory 1020 can be a separate device independent of the processor 1010, or can be integrated in the processor 1010.

Optionally, the chip 1000 can further include an input interface 1030. The processor 1010 can control the input interface 1030 to communicate with other devices or chips, and specifically, to obtain information or data transmitted by other devices or chips.

Optionally, the chip 1000 can further include an output interface 1040. The processor 1010 can control the output interface 1040 to communicate with other devices or chips, and specifically, to output information or data to other devices or chips.

Optionally, the chip can be applied to the terminal device in the embodiments of the present disclosure, and the chip can carry out the corresponding processes which are implemented by the terminal device in the methods of the embodiments of the present disclosure, which will not be repeated here for the sake of brevity.

It should be understood that the chip mentioned in the embodiments of the present disclosure can also be referred to as a system-level chip, a system chip, a chip system, or a system-on-chip.

The processor mentioned above may be a general-purpose processor, a digital signal processor (DSP), a field programmable gate array (FPGA), an application specific integrated circuit (ASIC) or other programmable logic devices, transistor logic devices, discrete hardware components, etc. The general-purpose processor mentioned above may be a microprocessor or any conventional processor.

The memory mentioned above may be either volatile memory or non-volatile memory, or may include both volatile and non-volatile memories. The non-volatile memory may be a read-only memory (ROM), a programmable read-only memory (PROM), an erasable programmable read-only memory (EPROM), an electrically programmable erase programmable read-only memory (electrically EPROM, EEPROM) or a flash memory. The volatile memory may be a random access memory (RAM).

It should be understood that the foregoing description of the memory is exemplary rather than limiting. For example, the memory in the embodiments of the present disclosure can also be a Static RAM (SRAM), a Dynamic RAM (DRAM), a Synchronous DRAM (SDRAM), a Double Data Rate SDRAM (DDR SDRAM), an Enhanced SDRAM (ESDRAM), a Synch Link DRAM (SLDRAM), a Direct Rambus RAM (DR RAM), among others. That is to say, the memory in the embodiments of the present disclosure is intended to include but is not limited to these and any other suitable types of memories.

The above embodiments may be implemented entirely or partly by software, hardware, firmware or any combination thereof. When implemented by software, it can be implemented entirely or partly in the form of a computer program product. The computer program product includes one or more computer instructions. When the computer program instructions are loaded and executed on the computer, the processes or functions in acordance with the embodiments of the present disclosure are entirely or partly generated. The computer can be a general-purpose computer, a dedicated computer, a computer network, or other programmable devices, the computer instructions can be stored in a computer-readable storage medium, or transmitted from one computer-readable storage medium to another. For example, the computer instructions can be transmitted from a website, a computer, a server, or a data center to another website site, computer, server or data center in a wired manner such as through a coaxial cable, an optical fiber or a digital subscriber line (DSL) or in a wireless manner such as an infrared, wireless, microwave manner or the like. A computer-readable storage medium may be any available medium that can be accessed by a computer or a data storage device such as a server or data center integrated with one or more available media. The available medium may be a magnetic medium (such as a floppy disk, a hard disk, a magnetic tape), an optical medium (such as a DVD), or a semiconductor medium (such as a solid state disk (SSD)).

It should be understood that in the embodiments of the present disclosure, the sequence numbers of the above-mentioned processes do not mean the performing order, and the performing order of the processes should be determined according to the functions and the internal logic thereof, and should not compose any limitation on the implementations of the embodiments of the present disclosure.

Those skilled in the art can clearly understand that for convenience and conciseness of the description, for the specific operating process of the systems, devices and units described above, reference can be made to corresponding processes in the foregoing method embodiments, which will not be repeated here.

Those described above are only specific implementations of the present disclosure, and the protection scope of the present disclosure is not limited thereto. Any alteration or replacement readily devised by a person skilled in the art within the technical scope disclosed in the present disclosure shall fall within the scope of the present disclosure. Therefore, the protection scope of the present disclosure shall be subject to the protection scope of the claims.

## Claims

1. A method for obtaining slice information, applied to a terminal device, the method comprising:
in response to a Non-Access Stratum of a terminal device receiving allowed network slice selection assistance information (NSSAI) or updating the allowed NSSAI, sending, by the Non-Access Stratum of the terminal device, intended slice information to an Access Stratum of the terminal device; and
receiving and storing, by the Access stratum of the terminal device, the intended slice information, so as to use the intended slice information in cell selection or cell reselection, wherein the intended slice information is the allowed NSSAI or a subset of the allowed NSSAI.

2. The method according to claim 1, further comprising:
selecting, by the Access Stratum of the terminal device, a suitable cell for access according to the intended slice information and supported slice information in a broadcast message.

3. The method according to claim 1 or 2, wherein the Non-Access Stratum of the terminal device receiving the allowed NSSAI comprises:
receiving, by the Non-Access Stratum of the terminal device, a registration accept message, wherein the registration accept message carries the allowed NSSAI.

4. The method according to claim 1 or 2, wherein the Non-Access Stratum of the terminal device receiving the allowed NSSAI comprises:
receiving, by the Non-Access Stratum of the terminal device, a configuration update command message, wherein the configuration update command message carries the allowed NSSAI.

5. The method according to claim 1 or 2, wherein the Non-Access Stratum of the terminal device updating the allowed NSSAI comprises:
receiving, by the Non-Access Stratum of the terminal device, a configuration update command message, wherein the configuration update command message carries rejected NSSAI; and
updating, by the Non-Access Stratum of the terminal device, the allowed NSSAI using the rejected NSSAI.

6. The method according to claim 1 or 2, wherein the intended slice information is the allowed NSSAI received by the terminal device or a subset of the allowed NSSAI received by the terminal device; or
the intended slice information is the allowed NSSAI updated by the terminal device or a subset of the allowed NSSAI updated by the terminal device.

7. A terminal device, comprising: a sending module in a Non-Access Stratum and a receiving and storing module in an Access Stratum; wherein,
the sending module is configured to send intended slice information to the receiving and storing module in response to the Non-Access Stratum of the terminal device receiving allowed NSSAI or updating the allowed NSSAI; and
the receiving and storing module is configured to receive and store the intended slice information, so as to use the intended slice information in cell selection or cell reselection, wherein the intended slice information is the allowed NSSAI or a subset of the allowed NSSAI.

8. The terminal device according to claim 7, further comprising:
a selection module in the Access Stratum, configured to select a suitable cell for access according to the intended slice information and supported slice information in a broadcast message.

9. The terminal device according to claim 7 or 8, wherein the terminal device further comprises:
a first receiving module in the Non-Access Stratum, configured to receive a registration accept message, wherein the registration acceptance message carries the allowed NSSAI.

10. The terminal device according to claim 7 or 8, wherein the terminal device further comprises:
a second receiving module in the Non-Access Stratum, configured to receive a configuration update command message, wherein the configuration update command message carries the allowed NSSAI.

11. The terminal device according to claim 7 or 8, wherein the terminal device further comprises: a third receiving module and an updating module in the Non-Access Stratum; wherein,
the third receiving module is configured to receive a configuration update command message, and the configuration update command message carries rejected NSSAI, and
the updating module is configured to update the allowed NSSAI using the rejected NSSAI.

12. The terminal device according to claim 7 or 8, wherein the intended slice information is the allowed NSSAI received by the terminal device or a subset of the allowed NSSAI received by the terminal device; or
the intended slice information is the allowed NSSAI updated by the terminal device or a subset of the allowed NSSAI updated by the terminal device.

13. A terminal device comprising a processor and a memory for storing a computer program, wherein the processor is configured to call and run the computer program stored in the memory to perform the method according to any one of claims 1 to 6.

14. A chip, comprising a processor configured to call and run a computer program from a memory to cause a device installed with the chip to perform the method according to any one of claims 1 to 6.

15. A computer-readable storage medium for storing a computer program that causes a computer to perform the method according to any one of claims 1 to 6.

16. A computer program product comprising computer program instructions that cause a computer to perform the method according to any one of claims 1 to 6.

17. A computer program that causes a computer to perform the method according to any one of claims 1 to 6.
